# EUROPEAN PATENT SPECIFICATION

(11) **EP 3 810 498 B1**
(45) Date of publication and mention of the grant of the patent: **10.08.2022**
(21) Application number: 19736506.7
(22) Date of filing: 05.06.2019
(51) Int. Cl.: B63B 79/10, B63B 79/30, B63B 71/00, B63B 59/04, B63H 1/28

(54) **REMOTE ASSESSMENT OF SHIP PROPELLER FOULING**
FERNBEURTEILUNG DES BEWUCHSES EINES SCHIFFSPROPELLERS
ESTIMATION À DISTANCE DE L'ENCRASSEMENT D'UNE HÉLICE DE NAVIRE

(30) Priority: 21.06.2018 GR 20180100269
(43) Date of publication of application: 28.04.2021
(73) Proprietor: Propulsion Analytics I.K.E. - P.C., 18537 Piraeus (GR)
(72) Inventor: KYRTATOS, Nikolaos, 15452 Psychiko (GR)
(74) Representative: Samuelides, Emmanuel
(86) International application number: PCT/IB2019/054689
(87) International publication number: WO 2019/243932

(56) References cited:
- WO-A1-2017/089643

## Description

The invention refers to a method and a device of monitoring the condition of a propeller of a marine vehicle. Further, the invention refers to a device and a method for a remote detection of the condition of a propeller of a marine vehicle and in particular the fouling of a propeller.

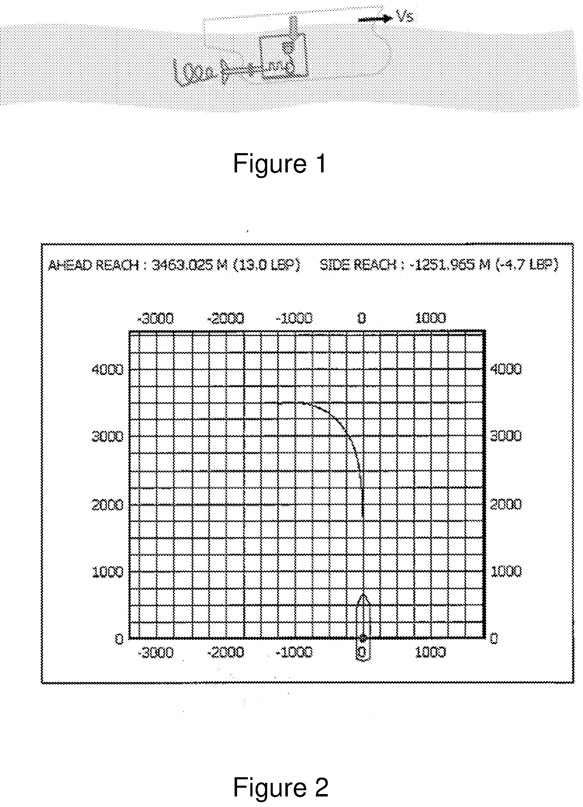

**Figure 1** presents schematically the forward motion of a ship in water, through the action of a propeller. The ship hull is propelled through water at a certain speed usually through one or more propellers, which produce thrust to counteract the resistance of the hull moving through the water. A properly functioning propeller produces adequate thrust when rotated at some rotational speed by a connected main engine, which consumes fuel to produce the required torque. For a certain hull shape the resistance at a certain speed through water depends on the ship loading and hull trim, the external weather effects of wind and waves, as well as the effects of fouling over time of the hull and appendices: the fuel that the engine consumes rotates the propeller shaft with a rotational speed. The rotation of the propeller through water generates a thrust force counterbalancing the ship's resistance, so that the ship moves with a forward speed Vₛ.

Fouling is marine growth on the ship's hull and propeller and is the main reason for ship performance degradation. The remedies for fouling are various types of coatings applied to the underwater surface of the hull, as well as in- water cleaning of the hull and/or polishing of the propeller at regular intervals. However, fouling is difficult to measure and various modeling and analysis methods address the issue. Recently, ISO 19030 standard has been published and refers to such measurements and procedures.

Usually, in assessing the ship's performance, the fuel consumption is monitored and related to the vessel's speed. Overconsumption is attributed either to under-performance of the thermal main engine, weather effects, hull fouling or propeller fouling.

EP-2093552 presents a method and a device for determining propeller efficiency on board of a ship. The method relies on the determination of the advance velocity of the water as it enters the plane of the propeller. In view of the difficulty to measure the advance velocity, the disclosure proposes determining it using measurement data produced by inducing harmonic excitation in the ship propulsion system when the ship is assumed to sail under a steady state.

Other performance parameters that are difficult to measure with adequate accuracy are the propeller shaft torque, the vessel speed through water (abbreviation: STW), i.e. the speed of the vessel with respect to a freely floating object on water, and the distinct effects of the hull fouling vs. the propeller fouling.

An other method and device for determining propeller efficiency is known from WO 2017/089643 A1 in which the fouling of the propeller is assessed based on an estimated decrease of the shaft power. Calculation of the shaft power requires the provision of several sensors to measure the thrust generated by the propeller, the torque in the shaft of the propulsion system, the rotational speed of the shaft of the propeller, and the speed through water of the vessel.

The object of the present invention is a method and a device to remotely detect the condition of the propeller of a marine vehicle. A further object of the present invention is a method and a device to remotely detect the condition of the propeller of a marine vehicle that does not have the problems of the known methods. A further object of the present invention is a method and a device to remotely detect the fouling on a propeller of a marine vehicle. An object of the invention is a computer program to execute the steps of the method when it is run in a computer device.

The invention is defined in the independent claims.

According to the invention the method of assessing the fouling of a propeller that is mounted to a vessel and is connected to a main engine that provides power to the propeller, includes the following steps i) while the vessel travels with a pre-defined speed through water, cutting the power to the propeller and recording the actual relation of revolutions per unit time vs. time of the propeller, ii) retrieving a nominal relation of revolutions per unit time vs. time of the propeller, which nominal relation defines the relation of revolutions per unit time vs. time of the propeller with no fouling and mounted to the vessel, while the main engine does not provide power to the propeller and with the speed through water of the vessel at the initial point of the nominal relation being equal to said pre-defined speed, iii) comparing the nominal relation and the actual relation and quantifying the comparison of the actual relation and the nominal relation by at least an arithmetic parameter iv) assessing the level of fouling of the propeller by comparing the arithmetic parameter with a threshold value.

Step i) of the method described in the previous paragraph is performed during an "inertia stop" or "coasting" maneuver. This maneuver is described in the ITTC Sea Trial Guidelines "Stopping Inertia Test", Para 2.2.8. ITTC Recommended Procedures, 7.5-04, 02-01, Full Scale maneuvering Trials Procedure, 2002 as Stopping Inertia Test. According to the invention, the maneuver is used to assess the fouling of the propeller.

With the present method it is possible to detect the condition of the propeller remotely, without relying on values of the performance that are cumbersome and costly to measure. According to the method, the monitoring and detection of the condition of the propeller relies on the values of shaft RPM versus time, which parameters may both be easily measured with accuracy. The method may be also used to detect other damages of the propeller of a vessel.

The inertia stop maneuver is the first phase of the more extensive crash stop maneuver and it is usually referred to as the coasting phase or coasting maneuver. During the crash stop maneuver the propeller thrust is shut down by cutting the fuel to the engine as it is described in detail by i) Kyrtatos, N.P., Koumbarelis, I. "Performance prediction of next generation slow speed diesel engines during ship manoeuvres". Trans IMarE, Vol. 106, Part I, pp. 1-26,1994, ii) Wirz, F. "Optimisation of the crash-stop maneuvre of vessels employing slow-speed two-stroke engines and fixed pitch propellers". Journal of Marine Engine & Technology, Voll 11, No1, pp. 35-43,2012 and iii) Harvald, S.A. "Factors Affecting the Stopping Ability of Ships". International Shipbuilding Progress, 260 pp. 106-121, 1976.

The nominal relation of revolutions per unit time vs. time of the propeller is recorded when the propeller has no fouling, for example during the ship trials or after cleaning of the propeller, and while the main engine does not provide power to the propeller. Recording starts at time t=0, with the speed of the vessel at time t=0 having the pre-defined level. The nominal relation is stored in electronic storage means for further use and comparison with the actual relation.

The comparison of the nominal relation and the actual relation may be performed by comparing one or more characteristic values of the respective relations. Such a characteristic value may be the parameter Nq,s, which is the instantaneous equilibrium propeller shaft rpm, when performing a coasting maneuver with a certain initial speed STW - the initial speed is the speed when the power is cut off. Nq,s is a parameter that may be used to compare the relations of rpm versus time recorded at various coasting maneuvers with the same initial ship speed. It may be detected, when the speed reaches a certain level, for example a pre-determined value, which may be within a range of 30% and 70% of the pre-defined speed, preferably within a range of 45% and 65% of the predefined speed, or after a certain time from the beginning of the test, or after the sharp decrease of the rpm's a few seconds after cutting-off the power. The latter may be defined at the crossing of the tangents of the end points of the relation of the rpm per unit time versus time. The characteristic value Nq,s may also be the average value of revolutions per minute during a certain period, for example when the STW is between 90% and 70% of the initial speed.

The comparison of the actual relation and the nominal relation may be quantified by an arithmetic parameter, such as the difference of the values NN and NA, whereby NN is the revolutions per unit time of the propeller according to the nominal relation, when the speed through water of the vessel has a pre-determined value, and NA is the revolutions per unit time of the propeller according to the actual relation, when the speed through water of the vessel has the same pre-determined value. Alternatively or additionally the comparison may be reflected by the difference of the mean value of the revolutions of the propeller per unit time during a period when the speed through water drops from a first speed V1 to a second speed V2. The value or values of these arithmetic parameters is/are compared with corresponding threshold value or values provided by the user. The assessment of the fouling of the propeller as well as the level of the fouling may be based on the comparison of the arithmetic value or values with the corresponding threshold value or threshold values.

An example of a method for remote detection of the condition of a propeller mounted to a vessel and connected to a main engine that provides power to the propeller via a rotating shaft includes the following steps:
- monitoring a nominal relation of revolutions per unit time vs. time of the propeller shaft, starting at time t=0, representing the performance of the propeller in idle condition under the action of the wake generated by the hull of the vessel, while the main engine does not provide power to the propeller, with the speed of the vessel at time t=0 having a pre-defined level. The nominal relation is recorded with the propeller free of fouling;
- storing the nominal relation in electronic storage means;
- while the vessel travels with said pre-defined level of speed, cutting the power to the propeller and recording the actual relation of revolutions per unit time vs. time of the propeller;
- comparing the nominal relation and the actual relation and on the basis of said comparison, defining the condition of the propeller.

In some embodiments of the invention, sampling of revolutions per minute of the propeller during recording of the actual relation and/or the nominal relation is performed at a sampling rate lower than 60 Hz. It has been ascertained that a sampling rate of 1 Hz or about 1 Hz is satisfactory. The revolutions per minute of the propeller may be measured by means configured to measure the revolutions per minute of the propeller shaft.

In a preferred embodiment, the method includes the recording of the stopping time and or of the stopping distance that the vessel needs or travels respectively to decelerate from a first pre-set speed through water to a second pre-set speed through water. The stopping time and/or the stopping distance are determined both performing the nominal coasting maneuver to record the nominal relation and the actual coasting maneuver to record the actual relation, i.e. without providing power to the propeller of the vessel. The comparison of the respective values of the two tests reflects the level of fouling of the hull. These values may be used together with the nominal relation and he actual relation in the assessment of the fouling of the propeller.

Optionally the method may include further method steps to detect, if the comparison of the nominal and the actual relations are influenced by other factors, for example structural damage of the propeller.

The test may be repeated regularly, for example monthly, to highlight the progressive deterioration of propeller performance due to fouling so as to support decision on cost benefit of propeller cleaning.

The method may be also used to detect the condition of rotating systems that generate driving forces or torques.

An embodiment of the method according to the invention has the following steps:
- Performing a coasting maneuver by rapidly reducing engine speed down to zero fueling, so that the initial speed of the vessel with no supply of power has a predefined level.
- Measuring at short intervals, preferably every ~ 1 sec, the propeller shaft rotational speed.
- Measuring the Log speed, i.e. the vessel speed through water STW, at intervals of preferably -15 sec.
- Measuring the time, for time-stamping all the other measurement events.
- At a pre-set log speed value, for example 60% of nominal cruising STW, the coasting maneuver is complete and the engine may be restarted for further operations.

The maneuver and data collection may be repeated at regular intervals, for example once a month or conveniently at the end of a trip. Preferably, the data collection is performed automatically.

The invention suggests executing the steps of the method with a computer program method. Such a computer program comprises instructions which, when the program is executed by a computer, causes the computer to carry out the following steps: a) reading a nominal relation of revolutions per unit time of the propeller vs. time and an actual relation of revolutions per unit time of the propeller vs. time while the main engine does not provide power to the propeller, b) comparing the nominal relation and the actual relation and quantifying the comparison of the actual relation and the nominal relation by at least an arithmetic parameter, c) assessing the level of fouling of the propeller by comparing the arithmetic parameter with a threshold value and d) alerting a user on the fouling of the propeller on the basis of said assessment

The program may be loaded to a computer on board a vessel, which computer has means to receive signals from sensors providing data of the speed of the vessel, while the vessel is travelling through water with her main engine not providing power to the propeller. The data may be processed by the computer program in combination with the nominal relation and the actual relation, to determine the fouling of the propeller and the hull of the vessel. A further parameter that may be also taken into account in the assessment of the fouling of the propeller is the variation of the consumption of the main engine, during a voyage. Increase in the consumption under similar operational conditions may be attributed to hull and propeller fouling.

According to the invention the device is to assess the fouling of a propeller mounted to a vessel and connected to a main engine that provides power to the propeller. The device includes a data acquisition system with sensors to record the relation of revolutions per unit time of the propeller vs. time while the main engine does not provide power to the propeller, a data storage means configured to store said relation, data transfer means to receive data from data acquisition system and store them to the data storage means and processing means configured to process a plurality of relations of revolutions per unit time vs. time of the propeller, to compare said relations and quantify the comparison by at least an arithmetic parameter and to assess the level of fouling of the propeller by comparing the arithmetic parameter with a threshold value.

The comparison between the plurality of relations of the revolutions per unit time of the propeller vs. time may be effected by comparing the respective values of revolutions per time unit of the propeller at a pre-determined speed through water of the vessel. These values are determined from the respective plurality of relations. Assessment of the fouling of the propeller is based on the comparison of these values.

The device may include a further data acquisition system to record the stopping time or/and the stopping distance that the vessel needs to decelerate from a first pre-set speed through water to a second pre-set speed through water. In an example of the invention, the data storage means is configured to store the stopping time or/and said stopping distance, and the processing means are configured to assess the fouling of the propeller on the basis of said comparison in combination with the stopping time or/and stopping distance. Decrease of the stopping time or/and stopping distance is attributed to fouling of the hull. A further operational parameter that is affected by the hull fouling is the consumption of the main engine.

Preferred embodiments of the invention are described with reference to **Figures 1 to 14****,** where:
**Figure 1** presents schematically the motion of a ship in water through the action of a propeller,
**Figure 2** depicts a ship's trajectory during an inertia maneuver, whereby the axes correspond to the spatial co-ordinates and LBP indicates the length between perpendiculars of the ship's hull,
**Figure** 3 shows the measurements of shaft rotations (capital RPM in the figure), ship speed, yaw angle, distance travelled with time during an inertia maneuver,
**Figure 4** shows the results of a simulation of a crash-stop astern maneuver, in terms of engine speed (full line), and vessel speed (line marked with boxes),
**Figure** 5 presents schematically the motion of a ship in water with the propeller acting as a water turbine,
**Figure** 6 presents the matching point of the power supplied by a propeller acting as a water turbine (full line) and the power demand due to friction in rotation of the shaft-line (dotted line),
**Figure** 7 shows how the efficiency of a propeller acting as a water turbine drops with blade fouling,
**Figure 8** presents the matching of the power supplied by a propeller with various fouling levels acting as a water turbine and the power demand due to friction in rotation of the shaft-line,
**Figure 9** illustrates the effect of propeller polishing on the characteristic value of rpm Nq,s,
**Figure 10** shows the shift of the locus of matching points with increased propeller blade fouling, with the arrow pointing towards curves with increased fouling,
**Figure 11** illustrated the change in deceleration of ship with hull fouling, with the arrow pointing towards curves with increased hull fouling,
**Figure 12** illustrates the effect of hull cleaning in stopping duration,
**Figure 13** illustrates the relation of the characteristic value of rpm Nq,s with fuel consumption penalty, with higher penalty indicating higher consumption,
**Figure 14** illustrates the relation of stopping duration to the fuel consumption penalty, with higher penalty indicating higher consumption.

The example below refers to a merchant ship **10** with a slow-speed engine **12** directly driving without gearing a fixed pitch propeller **14.**

The method includes an 'inertia stop' or 'coasting' maneuver. This maneuver is described in the ITTC Sea Trial Guidelines "Stopping Inertia Test", Para 2.2.8. ITTC Recommended Procedures, 7.5-04, 02-01, Full Scale maneuvering Trials Procedure, 2002 as Stopping Inertia Test. According to the invention, the maneuver is used to assess the fouling of the propeller. Optionally, a method according to the invention may be also used to assess the fouling of the hull.

Staring from a predefined ahead speed, for example the nominal cruising speed of the ship **10,** the engine **12** is stopped so that the ship **10** sails with no thrust. The test is completed, when the ship's **10** ahead speed is reduced to a preset value, for example 60% of the predefined ahead speed. The parameters measured during a stopping inertia test are:
- the head reach which is defined as distance travelled in the direction of the ship's initial course,
- the track reach which is the total distance travelled the ship's path,
- the lateral deviation which is the distance to port or starboard measured normal to the ship's initial course,
- the propeller **14** revolutions per minute (abbreviation: rpm),
- the ship's speed over ground-SOG/GPS
- the ship's Log speed, i.e. the speed through water STW,
- the time,
- the duration of the maneuver.

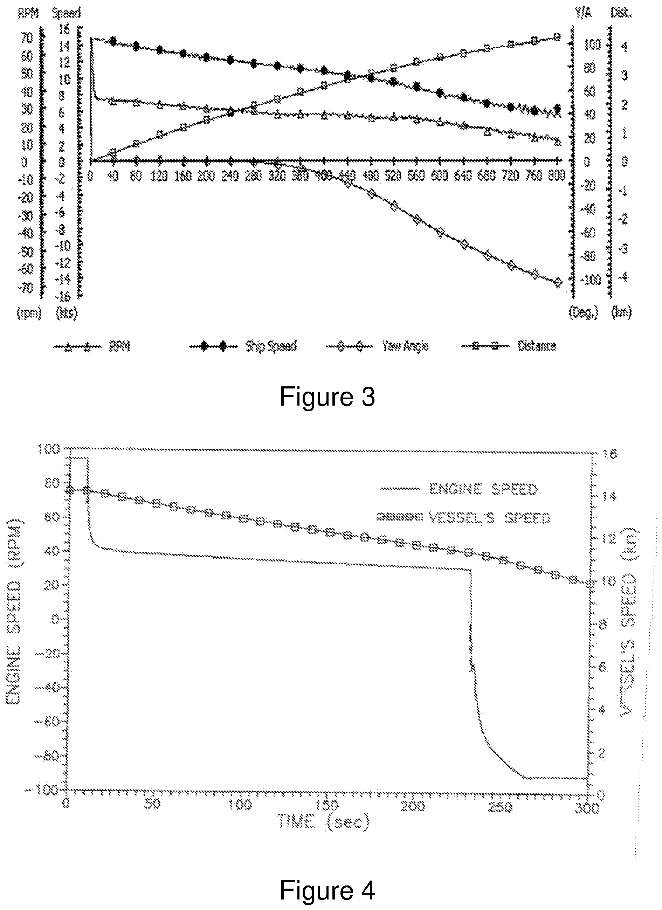

The actual measured parameters in an inertia stop test during the sea trials of a vessel, which includes the propeller shaft **15** rpm, ship speed, yaw angle, distance and trajectory are shown in **Figure** 2 and **Figure 3****.**

The total time for the maneuver depends on the ship hull type and size, typically in the region of 5-15 minutes for merchant ships. It is observed that if the speed drops considerably, for example beyond 60% of the cruising speed, without rudder action, there may be some lateral deviation, i.e. lateral reach, depending on initial conditions, wave , sea current and wind disturbances.

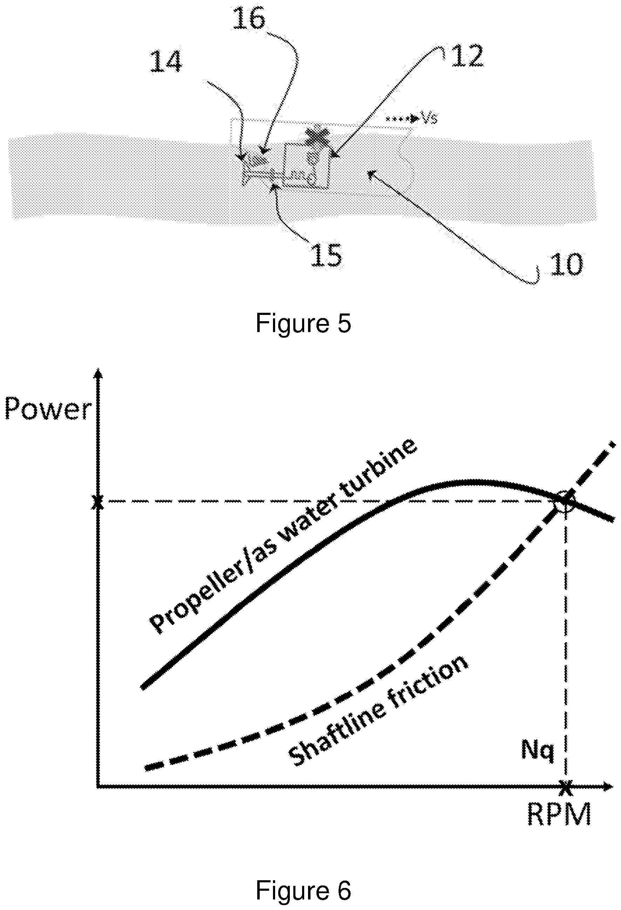

**Figure 4** presents simulations of the complete crash stop maneuver showing the sequence of events: cutting the fuel to the engine **12,** after an initial unstable phase during which the propeller **14** stops producing thrust, the propeller **14** acts as a water turbine driven by the wake **16** of the ship's **10** hull. While the propeller **14** acts as a water turbine, the instantaneous generated torque from propeller **14,** acting as turbine in the wake of the ship moving at an instantaneous ship velocity, matches the power demand of the shaft-line bearings friction at that instantaneous shaft rotational speed. During this phase the rotational speed of the propeller shaft is continuously adjusting to an off-design instantaneous equilibrium, with the ship's velocity dropping very slowly and the hull's kinetic energy similarly reducing very slowly with time. **Figure 5** presents schematically the forward motion of a ship in water with the propeller 14 acting as a water turbine: the ship moves in water with a forward speed Vₛ, without the engine providing energy to the propeller 14. As the ship moves the propeller 14 is trailed through the water, without being rotated by the ship's engine, hence it acts as a water turbine, which is fed with energy from the hull's wake thus counterbalancing the friction of the propeller shaft and any other elements attached to it.

The instantaneous equilibrium revolutions per minute is achieved where the propeller/turbine produced torque equals the demand torque of the shaft-line, which consists mainly of the rpm-dependent friction of shaft-line bearings and in case of a directly connected and rotated engine, the friction of the engine bearings, the piston rings and some heat transfer. Thus, the instantaneous equilibrium matching point rpm Nq is initially reached when the propeller/turbine produced torque matches the shaft-line friction demand torque. The instantaneous equilibrium is depicted in **Figure 6****,** where the full line represents the power generated by the propeller acting as a water turbine versus the rpm and the dotted line the power consumed by the shaft-line also versus rpm. The relation of the power generated by the propeller acting as a water turbine versus the rpm, i.e. full line in **Figure 6****,** depends on the flow rate or the velocity of the fluid and moves towards the rpm axis with decreasing flow rate. As the velocity of the ship drops due to hull friction and wave-making resistance, the available wake energy is reduced and thus the torque produced by the propeller/turbine reduces and the matching point rpm moves to lower values. The locus of successive equilibrium matching points of propeller shaft rpm with time during a coasting maneuver is shown with the line marked with triangles in **Figure 3****.**

Subsequently the hull continues to decelerate gently under the influence of hull resistance, with the propeller trailing and rotating slowly.

When this "coasting" phase ends i.e. when the engine rotation by the propeller has dropped enough, then the engine reversing sequence may be initiated, to produce reverse thrust and to stop the ship, thus completing the 'crash stop' maneuver. **Figures 4** illustrates the reverse thrust with the negative values of engine's rpm.

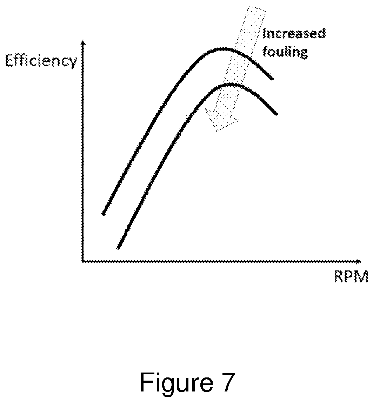

In the "coasting" phase, the propeller when running under the action of the hull wake as a water turbine, produces torque and power that depends on the wake provided thrust and the propeller efficiency. The efficiency of a typical hydrodynamic propeller acting as a turbine versus rpm is shown schematically in **Figure 7****,** where the arrow points towards curves representing efficiencies of propellers with increasing fouling.

The shaft-line friction power demand is practically related only to shaft rotational speed and this relation of friction power and rpm can be considered to be invariant over time i.e. not changing significantly over a period of several months, unless major wear or bearing failure occurs. Effects of environmental temperature or seawater condition which may affect shaft-line friction, are usually small and may be neglected or be taken into account by correction factors. Instantaneous equilibrium of rpm and Nq is reached when the produced power matches the demand power.

If fouling i.e. marine growth appears on the propeller blades, then the propeller efficiency in producing thrust may drop by 10% or even 20%.

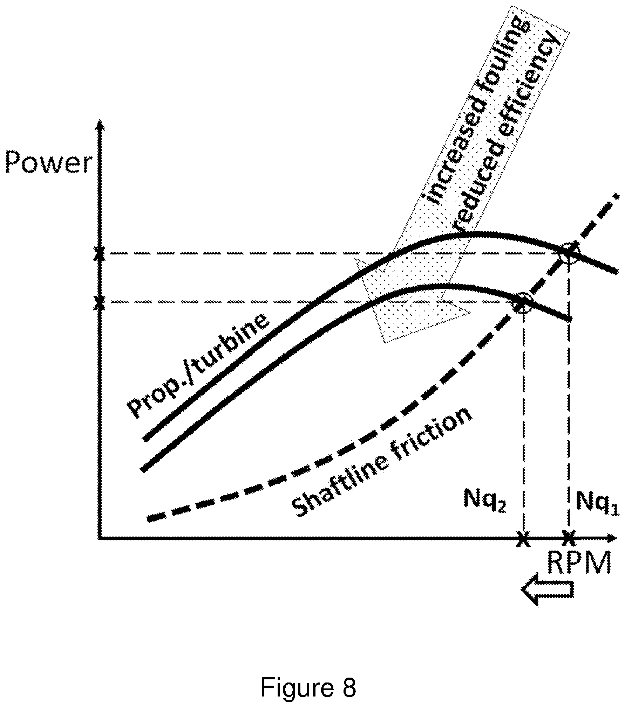

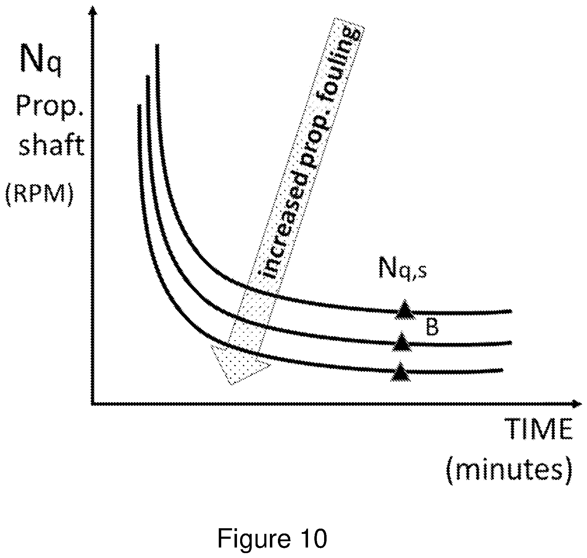

When a trailing propeller is acting as a water turbine, the efficiency in absorbing thrust and producing torque will also drop with fouling as illustrated in **Figure 7****.** When we perform two coasting maneuvers under similar conditions, i.e. when the wake is the same and the relation of the friction losses and other losses of energy of the shaft-line versus the rotational speed of the shaft remains the same, then the relation of the revolutions per minute of the propeller shaft versus time depends on the condition of the propeller. If the propeller **14** is relatively fouled then the rotation of the shaft decreases more rapidly and the graph of rpm versus time moves towards the time axis as depicted schematically in **Figure 10** where it can be noted that the locus of instantaneous equilibrium rpm Nq is retreating. This happens because under the same wake conditions when the propeller/turbine is less efficient it produces less power and satisfies the needs of the rotating shaft at relatively lower level of rpm. Thus, under such conditions, a drop in Nq will signify increasing propeller fouling or/and propeller damage. **Figure 8** shows the shift of the matching point, i.e. power versus rpm, as the fouling condition of the propeller worsens. The arrow in **Figure 8** points towards curves representing propellers with increasing fouling.

After performing several coasting maneuvers, it is possible to record the loci of propeller/turbine rpm with time and define the parameter Nq,s as the Nq at a pre-specified lower ship STW, for example a STW between 90%-60%of the nominal cruising STW at the start of the maneuver.

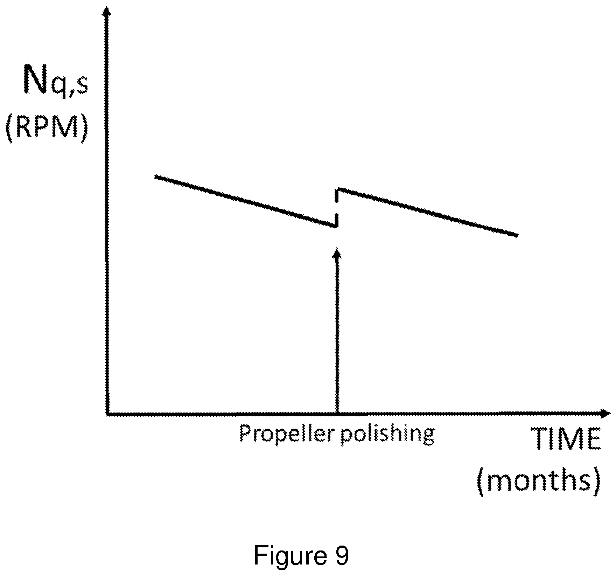

**Figure 9** reflects the effect of the fouling of the propeller on the equilibrium at a certain instance. The parameter Nq,s is the instantaneous equilibrium rpm at a certain level of ship speed, when performing a coasting maneuver with a certain initial speed SWT - the initial speed is the speed when the power is cut off, which equilibrium rpm is observed when the velocity of the ship reaches a certain level, for example 75% of the initial speed. **Figure 9** shows schematically an example of the trend of Nq,s over time, i.e. the value of Nq,s that is measured during successive tests performed during a period of several months. As it is depicted the value of Nq,s drops with time as the condition of the propeller deteriorates. After propeller cleaning the value should be mostly recovered. Nq,s is a parameter that may be used to compare the relations of rpm versus time recorded at various coasting maneuvers with the same initial speed. It may be detected, as already mentioned, when the speed reaches a certain level, or after a certain time from the beginning of the test, or subsequent to the sharp decrease of the rpm's a few seconds after cutting-off the power. The latter point is noted as point B in **Figure 10****.**

The wake provided thrust at the start of the maneuver will be somewhat affected by the hull fouling. This effect must be considered separately, dependent on hull fouling level. If it is considered that the fouling of the hull influences the instantaneous equilibrium rpm Nq, it is possible to introduce a correction factor.

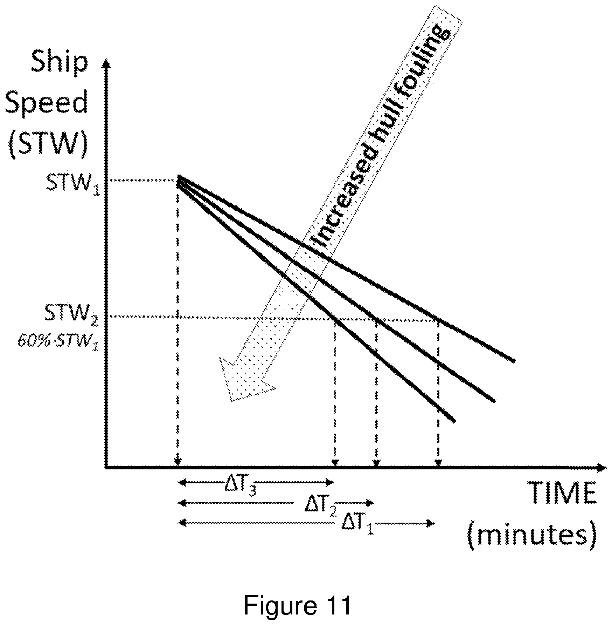

During the coasting phase, the hull resistance that is mainly due to skin friction and wave-making provides the primary force for ship deceleration. Hull fouling increases the skin friction resistance and may increase the fuel consumption by 8 to 12%, see for example Munk, T., Kane, D., Yebra, D.M. "The effects of corrosion and fouling on the performance of ocean-going vessels: a naval architecture perspective". Advances in Marine Antifouling Coatings, Woodhead Publishing, pp. 148-176, 2009. Thus, the deceleration of the hull in a coasting maneuver will increase with increased hull fouling. The time duration ΔT to reach the lower pre-specified STW - say 60% of nominal cruising speed at the start of the maneuver - will decrease with hull fouling, because the decelerating force due to the increased resistance will be greater, as illustrated schematically in **Figure 11****.**

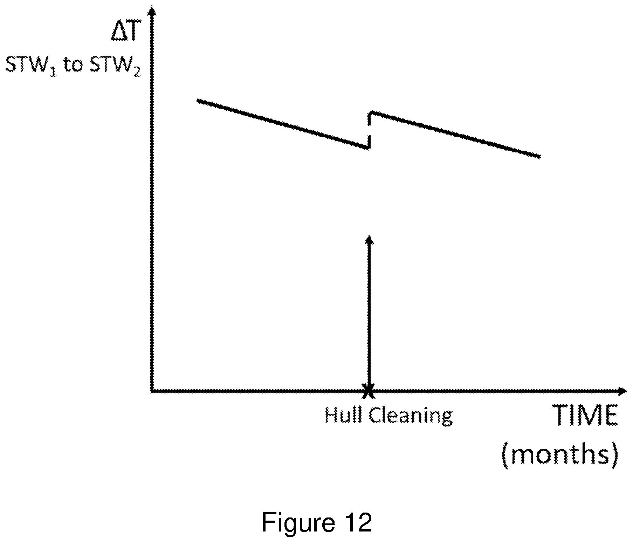

Over some months, the decrease in time duration ΔT will signify increasing hull fouling. After hull cleaning the stopping time duration ΔT will be longer, as illustrated in **Figure 12****.**

During the coasting phase the propeller absorbs some wake energy and creates some added resistance. This additional force due to the trailing propeller is not much affected over time by propeller blade fouling, since fouling on a trailing propeller has very small effect on the total viscous resistance of the vessel.

The maneuver has to be repeated and data collected at regular intervals, for example once a month or conveniently at the end of a trip. Similar or comparable navigation conditions, i.e. the ship attitude and loading, draft, trim, minimum rudder action, each time of performing the maneuver, facilitate the comparison of the results. Mild metocean conditions, i.e. less than 4 Beaufort (BF), no major current, light winds, low current, minimize any heavy weather, environmental and other effects.

For each time, prior to performing the maneuver, a measurement (or estimation/calculation) of the fuel consumption is performed at the nominal cruising speed STW at the "mild" metocean conditions, as defined above, so as to relate the fuel consumption to the state of the hull and propeller, as determined by the present method. Accurately measuring fuel consumption may be difficult. Propeller shaft torque measurement is more reliable but is also prone to errors. Measurement or estimation of engine produced torque via cylinder pressure diagrams and/or calculation, may be used as surrogate to measuring fuel consumption and may be augmented further if a way to ascertain any engine underperformance - which will be affecting fuel efficiency- is available. If torque measurement is not available, an estimate of the engine torque may be made by measuring the turbocharger rpm which can then be related to engine produced power with appropriate thermodynamic corrections for ambient conditions and turbine cleaning intervals. If accurate torque measurement is available, it may also be used during the coasting maneuver to designate the torque reversal in the propeller shaft from driving to trailing propeller and the subsequent torque produced by the trailing propeller as water turbine.

The measurement of true STW, whether by pitometer, impeller log, electromagnetic log, doppler effect log, is prone to errors, effects of fouling, pressure, salinity, calibration issues. Differences e.g. in pressure, salinity, currents, drifting may exist over two observation instances in the present method spanning approximately one month. In the present method, however, a set of consecutive readings from the same instrument are used over a time of about 10 minutes in uninterrupted succession. It may be assumed that there are no boundary condition changes or signal drifting over this brief period.

The procedure described above, with observing the locus of matching point propeller shaft speed with time and the time duration between two pre-set hydro speeds (STW) during a coasting maneuver, indicates the effects of progressive fouling of propeller and hull respectively.

The evaluation is relative to a reference and no overall mathematical model for hull and propeller hydrodynamics is needed.

The initial reference for the comparison and assessment may be the measurements in the first laden voyages following sea trials. Subsequently, partial reference may be measurements following dry-dock and any intermediate conditions after propeller polishing and/or hull brushing events. In those latter cases fouling would be mostly eliminated, but over time hull and propeller roughness, deformations, or other damage may be present and may have some influence on hull resistance or propeller efficiency. Subsequently to the sea trials, any increase in fuel consumption over time for similar sailing conditions is mainly due to both hull fouling and propeller fouling and secondarily due to any other structural damages or any engine underperformance. To ascertain the influence of each of the two causes, namely of hull and propeller fouling to observed increases in fuel consumption, a succession of measurements, comparisons and observations may be performed.

The difference in fuel consumption immediately subsequent to a propeller polishing compared to reference can be attributed only to effects of hull fouling.

The differences in fuel consumption before and after polishing should be due to propeller effects.

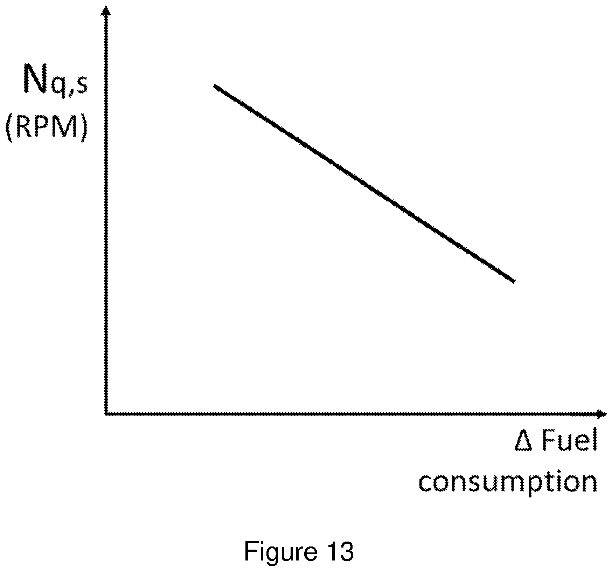

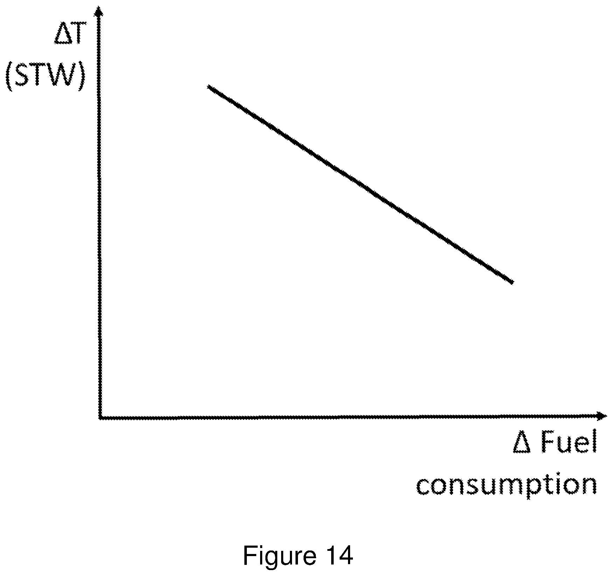

The expected relation between Nq,s and fuel consumption penalty, i.e. difference from reference, for the various instances is shown in **Figure 13** - the penalty increases, with increasing fuel consumption. Such a graph may reveal the effect of propeller fouling. Further, the relation between stopping time duration ΔT between two set STW values for each instance and the respective fuel consumption penalty **Figure 14****,** shall reflect hull fouling effect for this particular vessel. This information may be used to optimize hull and propeller cleaning and assist in ship schedule optimization.

The method of monitoring the fouling of the propeller is implemented by a diagnostic system that includes
✔ a data acquisition system with sensors to detect the rotational speed of the propeller shaft or the propeller
✔ a data storage means configured to store time series of the propeller shaft and/or the propeller rotational speed
✔ input means to receive data from the data acquisition system and store them to the storage means
✔ CPU configured to determine and provide time series of various parameters, such as the revolutions per minute of the propeller shaft and/or the propeller, to compare time series of one or more parameters and on the basis of said comparison assess the condition of the propeller

The diagnostic system may further include an operational decision support system, which provides instructions to the user based on the comparison two or more time series of the rotational speed of the propeller shaft and/or the propeller, which have been obtained at different time instants, for example with a month's difference.

The diagnostic system may have a data cleaning front-end to improve the quality of time series.

The system may also include one or more sensors to measure one or more of the following items: STW, shaft torque, fuel consumption. The system may import parameters such as Speed Through Water, Torque, Fuel consumption if needed from other data acquisition systems of from appropriate computational systems with algorithms to estimate such parameters from data of other sensors or from output from virtual (mathematical) sensors.

A device to detect the fouling of a propeller 14 includes a data acquisition system with sensors to record the relation of revolutions per unit time of the propeller **14** vs. time, a data storage means configured to store said relation, input means to receive data from data acquisition systems and store them to the data storage means. The device further includes a CPU that is configured to process a plurality of relations of revolutions per unit time vs. time of the propeller **14,** to compare said relations and on the basis of said comparison assess the fouling of the propeller **14.** These relations are obtained at different time instants. Two or more consecutive relations may be obtained for example during tests that were performed over a timespan of approximately six months. One of the plurality of the relations is the nominal relation that defined the reference condition of the unfouled propeller.

In one embodiment of the invention the processing means of the device is configured to extract from the plurality of relations, the revolutions per unit time of the propeller **14** at a pre-determined speed through water and to base the comparison of the plurality relation on the comparison of these values. The difference of the values of the relations from the value of the revolutions per unit time of the propeller **12** determined from the reference relation is an indicator of the fouling level of the propeller and reflects the propeller's condition. **Figure 9** presents schematically the revolutions per unit time of the propeller **14** at a pre-determined speed, extracted from the results of a plurality of coasting maneuvers, which are performed within a period of months or years.

A further factor that may have an effect on the revolutions of the propeller per time unit is the fouling of the hull. However fouling of the hull usually does not change for long periods and may become significant after, for example, a year. Fouling of the hull also affects the fuel consumption and stopping distance.

In a further embodiment the diagnostic system includes means to measure the stopping distance during a coasting maneuver, i.e. the distance that the ship travels between two pre-defined SWT, when the engines are cut and the propeller is not under power. Comparing the stopping duration (time) when performing a coasting maneuver between two set STW, with the ship sailing conditions being similar (e.g. same draft, minimum rudder movement, mild metocean conditions) will indicate increased fouling of the hull with shorter stopping duration. With this embodiment it is possible during two coasting tests to measure both the Nq,s and the stopping distance and subsequently to determine the indicator of the fouling level of the propeller considering the difference of both parameters, i.e. Nq,s and the stopping distance . Thus, any significant hull fouling is considered.

In another embodiment, the effect of the hull fouling is taken into account, considering the fuel consumption penalty. After several such maneuvers over a period of several months, then relating stopping duration (time) to the fuel consumption at certain STW just before the start of each maneuver (and excluding any engine underperformance leading to increased consumption) will relate the hull fouling to the fuel consumption penalty. In general, hull fouling is taken into account in the assessment of the propeller fouling via the drop in Nq,s either through the decrease of stopping distance or the fuel consumption penalty or both.

## Claims

1. Method of assessing the fouling of a propeller (14) mounted to a vessel (10) and connected to a main engine (12) that provides power to the propeller (14), the method including while the vessel (10) travels with a pre-defined speed through water, cutting the power to the propeller (14) and recording the actual relation of revolutions per unit time of the propeller (14) vs. time and whereby the method is **characterized in that** it further includes a) retrieving a nominal relation revolutions per unit time of the propeller (14) vs. time, which nominal relation defines the relation of revolutions per unit time of the propeller (14) vs. time with no fouling and mounted to the vessel, while the main engine (12) does not provide power to the propeller (14) and with the speed through water of the vessel (10) at the initial point of the nominal relation being equal to said predefined speed, b) comparing the nominal relation and the actual relation and quantifying the comparison of the actual relation and the nominal relation by at least an arithmetic parameter c) assessing the level of fouling of the propeller (14) by comparing the arithmetic parameter with a threshold value.

2. Method of according to claim 1, including recording the nominal relation of revolutions per unit time of the propeller (14) vs. time, starting at time t=0, when the propeller (14) has no fouling and while the main engine (12) does not provide power to the propeller (14), with the speed through water of the vessel at time t=0 being equal to said pre-defined speed and storing the nominal relation in electronic storage means.

3. Method according to claim 1 or claim 2, whereby sampling of the revolutions per unit time of the propeller (14) during recording of the actual relation is performed at a sampling rate equal or lower than 60 Hz, preferably with sampling rate of approximately 1 Hz.

4. Method **according to anyone of claims 1 to 3,** whereby sampling of the revolutions per unit time of the propeller (14) during recording of the nominal relation is performed at a sampling rate equal or lower than 60 Hz, preferably with sampling rate of approximately 1 Hz.

5. Method **according to anyone of claims 1 to 4,** including determining the revolutions per unit time of the propeller (14) NN according to the nominal relation, when the speed through water of the vessel (10) has a pre-determined value, determining the revolutions per unit time of the propeller (14) NA according to the actual relation, when the speed through water of the vessel (10) has said pre-determined value, comparing NN and NA, the comparison of the nominal relation and the actual relation being based on the comparison of NN and NA.

6. Method **according to anyone of claims 1 to 5** whereby said pre-determined value is within a range of 30% and 70% of the pre-defined speed, preferably within a range of 45% and 65% of the pre-defined speed.

7. Method **according to anyone of claims 1 to 5** whereby said pre-determined value is equal or greater than 60% of the pre-defined speed.

8. Method **according to anyone of claims 1 to 7**, whereby during recording the actual relation of revolutions per unit time of the propeller (14) vs. time while the vessel (10) travels with a pre-defined speed through water, recording the actual stopping time that the vessel (12) needs to decelerate from a first pre-set speed through water to a second preset speed through water, retrieving a value of nominal stopping time that the vessel (12) needs to decelerate from the first pre-set speed through water to the second pre-set speed through water with the hull of the vessel (10) clean of fouling, comparing the actual stopping time and the nominal stopping time and defining an index reflecting the fouling of the propeller (14) that depends on the comparison of the actual relation and the nominal relation and the comparison of the actual stopping time and the nominal stopping time.

9. A computer program for assessing the fouling of a propeller (14) mounted to a vessel (10) and connected to a main engine (12) that provides power to the propeller (14) comprising instructions which, when the program is executed by a computer, causes the computer to carry out the following steps: a) reading a nominal relation of revolutions per unit time of the propeller (14) vs. time and an actual relation of revolutions per unit time of the propeller (14) vs. time while the main engine (12) does not provide power to the propeller (14), b) comparing the nominal relation and the actual relation and quantifying the comparison of the actual relation and the nominal relation by at least an arithmetic parameter and c) assessing the level of fouling of the propeller (14) by comparing the arithmetic parameter with a threshold value, d) alerting a user on the fouling of the propeller (14) on the basis of said assessment.

10. A computer program according to claim 9, whereby comparing the nominal relation and the actual relation is performed by comparing the values of the revolutions per unit time of the propeller (14) obtained by the nominal relation and the actual relation respectively, at a predetermined speed.

11. A computer program according to claims 9 or 10, loaded to a computer on board a vessel (10) with a main engine (12) configured to provide power to the propeller (12), which computer has means to receive signals from sensors, whereby the sensors provide data of the speed of the vessel (10), while the vessel (10) is travelling through water with the main engine (12) not providing power to the propeller (14), said data being processed by the computer program in combination with the nominal relation and the actual relation, to determine the fouling of the propeller (14) and the hull of the vessel (10).

12. Device to assess the fouling of a propeller (14) mounted to a vessel (10) and connected to a main engine (12) that provides power to the propeller (14), whereby the device includes a data acquisition system with sensors to record the relation of revolutions per unit time of the propeller (14) vs. time while the main engine (12) does not provide power to the propeller (14), a data storage means configured to store said relation, data transfer means to receive data from data acquisition system and store them to the data storage means and processing means configured to process a plurality of relations of revolutions per unit time vs. time of the propeller (14), to compare said relations, quantify the comparison by at least an arithmetic parameter and assess the level of fouling of the propeller (14) by comparing the arithmetic parameter with a threshold value.

13. Device according to claim 12, whereby the processing means are configured to process a plurality of values of the revolutions per unit time of the propeller (12) at a predetermined speed through water of the vessel from a respective plurality of relations of revolutions per unit time of the propeller (14) vs. time, to determine said plurality of values from said plurality of relations and to assess the fouling of the propeller (14) on the basis of said values.

14. Device according to claim 12 or claim 13, whereby the device includes a further data acquisition system to record the stopping time or/and the stopping distance that the vessel (12) needs to decelerate from a first pre-set speed through water to a second preset speed through water, the data storage means being configured to store said stopping time or/and said stopping distance, and the processing means being configured to assess the fouling of the propeller (14) on the basis of said comparison in combination with the stopping time or/and stopping distance.

## Patentansprüche

1. Verfahren zum Beurteilen des Anwuchses an einer Schiffsschraube (14), die an einem Wasserfahrzeug (10) montiert ist und mit einem Hauptmotor (12) verbunden ist, der Leistung für die Schiffsschraube (14) bereitstellt, wobei das Verfahren einschließt, während das Wasserfahrzeug (10) mit einer vorbestimmten Geschwindigkeit durch Wasser fährt, Abstellen der Leistung für die Schiffsschraube (14) und Aufzeichnen des gegenwärtigen Verhältnisses von Umdrehungen pro Zeiteinheit der Schiffsschraube (14) im Vergleich zu Zeit, und wobei das Verfahren **dadurch gekennzeichnet ist, dass** es weiter Folgendes einschließt a) Abrufen eines nominalen Verhältnisses von Umdrehungen pro Zeiteinheit der Schiffsschraube (14) im Vergleich zu Zeit, wobei das nominale Verhältnis das Verhältnis von Umdrehungen pro Zeiteinheit der an dem Wasserfahrzeug montiertem Schiffsschraube (14) im Vergleich zu Zeit ohne Anwuchs definiert, während der Hauptmotor (12) keine Leistung für die Schiffsschraube (14) bereitstellt, und wobei die Geschwindigkeit des Wasserfahrzeug (10) durch Wasser an einem anfänglichen Punkt des nominalen Verhältnisses gleich ist wie die vorbestimmte Geschwindigkeit, b) Vergleichen des nominalen Verhältnisses und des gegenwärtigen Verhältnisses und Quantifizieren des Vergleichs des gegenwärtigen Verhältnisses und des nominalen Verhältnisses durch mindestens einen arithmetischen Parameter c) Beurteilen des Anwuchgrads an der Schiffsschraube (14) durch Vergleichen des arithmetischen Parameters mit einem Schwellenwert.

2. Verfahren **nach Anspruch 1,** einschließend Aufzeichnen des nominalen Verhältnisses der Umdrehungen pro Zeiteinheit der Schiffsschraube (14) im Vergleich zu Zeit, beginnend bei Zeit t=0, wenn die Schiffsschraube (14) keinen Anwuchs aufweist und während der Hauptmotor (12) keine Leistung für die Schiffsschraube (14) bereitstellt, wobei die Geschwindigkeit des Wasserfahrzeugs durch Wasser zur Zeit t=0 gleich ist wie die vorbestimmte Geschwindigkeit, und Speichern des nominalen Verhältnisses in elektronischen Speichermitteln.

3. Verfahren **nach Anspruch 1 oder Anspruch 2,** wobei Abtasten der Umdrehungen pro Zeiteinheit der Schiffsschraube (14) während des Aufzeichnens des gegenwärtigen Verhältnisses mit einer Abtastrate durchgeführt wird, die gleich oder weniger 60 Hz ist, vorzugsweise mit einer Abtastrate von ungefähr 1 Hz.

4. Verfahren **nach einem der Ansprüche 1 bis** 3, wobei Abtasten der Umdrehungen pro Zeiteinheit der Schiffsschraube (14) während des Aufzeichnens des nominalen Verhältnisses mit einer Abtastrate von gleich oder weniger als 60 Hz durchgeführt wird, vorzugsweise mit einer Abtastrate von ungefähr 1 Hz.

5. Verfahren **nach einem der Ansprüche 1 bis 4,** wobei Bestimmen der Umdrehungen pro Zeiteinheit der Schiffsschraube (14) NN gemäß dem nominalen Verhältnis einschließt, wenn die Geschwindigkeit des Wasserfahrzeugs (10) durch Wasser einen vorbestimmten Wert aufweist, Bestimmen der Umdrehungen pro Zeiteinheit der Schiffsschraube (14) NA gemäß dem gegenwärtigen Verhältnis, wenn die Geschwindigkeit des Wasserfahrzeugs (10) durch Wasser den vorbestimmten Wert aufweist, Vergleichen von NN und NA, wobei der Vergleich des nominalen Verhältnisses und des gegenwärtigen Verhältnisses auf der Grundlage des Vergleichs von NN und NA erfolgt.

6. Verfahren **nach einem der Ansprüche 1 bis 5,** wobei der vorbestimmte Wert innerhalb eines Bereichs von 30 % und 70 % der vorbestimmten Geschwindigkeit liegt, vorzugsweise innerhalb eines Bereichs von 45 % und 65 % der vorbestimmten Geschwindigkeit.

7. Verfahren **nach einem der Ansprüche 1 bis 5,** wobei der vorbestimmte Wert gleich oder größer ist als 60 % der vorbestimmten Geschwindigkeit.

8. Verfahren **nach einem der Ansprüche 1 bis 7,** wobei während des Aufzeichnens des gegenwärtigen Verhältnisses von Umdrehungen pro Zeiteinheit der Schiffsschraube (14) im Vergleich zu Zeit, während der das Wasserfahrzeug (10) mit einer vorbestimmten Geschwindigkeit durch Wasser fährt, Aufzeichnen der gegenwärtigen Anhaltezeit, die das Wasserfahrzeug (12) benötigt, um von einer ersten vorgegebenen Geschwindigkeit durch Wasser auf eine zweite vorgegebene Geschwindigkeit durch Wasser zu verlangsamen, Abrufen eines Werts von nominaler Anhaltezeit, die das Wasserfahrzeug (12) benötigt, um von der ersten vorgegebenen Geschwindigkeit durch Wasser auf die zweite vorgegebenen Geschwindigkeit durch Wasser zu verlangsamen, wenn der Rumpf des Wasserfahrzeugs (10) frei von Anwuchs ist, Vergleichen der gegenwärtigen Anhaltezeit und der nominalen Anhaltezeit und Definieren eines Indizes, der den Anwuchs an der Schiffsschraube (14) widerspiegelt, der von dem Vergleich des gegenwärtigen Verhältnisses und des nominalen Verhältnisses und dem Vergleich der gegenwärtigen Anhaltezeit und der nominalen Anhaltezeit abhängt.

9. Computerprogramm zum Beurteilen des Anwuchses an einer Schiffsschraube (14), die an einem Wasserfahrzeug (10) montiert ist und mit einem Hauptmotor (12) verbunden ist, der Leistung für die Schiffsschraube (14) bereitstellt, das Anweisungen umfasst, die, wenn das Programm von einem Computer ausgeführt wird, verursacht, dass der Computer folgende Schritte abarbeitet: a) Auslesen eines nominalen Verhältnisses von Umdrehungen pro Zeiteinheit der Schiffsschraube (14) im Vergleich zu Zeit und eines gegenwärtigen Verhältnisses von Umdrehungen pro Zeiteinheit der Schiffsschraube (14) im Vergleich zu Zeit, während der Hauptmotor (12) keine Leistung für die Schiffsschraube (14) bereitstellt, b) Vergleichen des nominalen Verhältnisses und des gegenwärtigen Verhältnisses und Quantifizieren des Vergleichs des gegenwärtigen Verhältnisses und des nominalen Verhältnisses durch mindestens einen arithmetischen Parameter und c) Beurteilen des Anwuchgrads an der Schiffsschraube (14) durch Vergleichen des arithmetischen Parameters mit einem Schwellenwert, d) Warnen eines Benutzers vor Anwuchs an der Schiffsschraube (14) auf der Grundlage der Beurteilung.

10. Computerprogramm nach Anspruch 9, wobei Vergleichen des nominalen Verhältnisses und des gegenwärtigen Verhältnisses durch Vergleichen der Werte der Umdrehungen pro Zeiteinheit der Schiffsschraube (14) durchgeführt wird, die bei einer vorbestimmten Geschwindigkeit jeweils aus dem nominalen Verhältnis und dem gegenwärtigen Verhältnis erhalten wurden.

11. Computerprogramm **nach Anspruch 9 oder 10,** das in einen Computer an Bord eines Wasserfahrzeugs (10) mit einem Hauptmotor (12), der ausgelegt ist, um Leistung für die Schiffsschraube (12) bereitzustellen, geladen ist, wobei der Computer Mittel aufweist, um Signale von Sensoren zu empfangen, wobei die Sensoren Daten der Geschwindigkeit des Wasserfahrzeug (10) bereitstellen, während das Wasserfahrzeug (10) durch Wasser fährt, während der Hauptmotor (12) keine Leistung für die Schiffsschraube (14) bereitstellt, wobei die Daten durch das Computerprogramm in Verbindung mit dem nominalen Verhältnis und dem gegenwärtigen Verhältnis verarbeitet werden, um den Anwuchs an der Schiffsschraube (14) und dem Rumpf des Wasserfahrzeugs (10) zu bestimmen.

12. Vorrichtung zum Beurteilen des Anwuchses an einer Schiffsschraube (14), die an einem Wasserfahrzeug (10) montiert ist und mit einem Hauptmotor (12) verbunden ist, der Leistung für die Schiffsschraube (14) bereitstellt, wobei die Vorrichtung ein Datenerfassungssystem mit Sensoren zum Aufzeichnen des Verhältnisses von Umdrehungen pro Zeiteinheit der Schiffsschraube (14) im Vergleich zu Zeit, während der Hauptmotor (12) keine Leistung für die Schiffsschraube (14) bereitstellt, Datenspeichermittel, die ausgelegt sind, um das Verhältnis zu speichern, Datenübertragungsmittel zum Empfangen von Daten von dem Datenerfassungssystem und deren Speichern auf den Datenspeichermitteln und Verarbeitungsmittel, die ausgelegt sind, um eine Vielzahl von Verhältnissen von Umdrehungen pro Zeiteinheit im Vergleich zu Zeit der Schiffsschraube (14) zu verarbeiten, um die Verhältnisse zu vergleichen, den Vergleich durch mindestens einen arithmetischen Parameter zu quantifizieren und den Anwuchgrad an der Schiffsschraube (14) durch Vergleichen des arithmetischen Parameters mit einem Schwellenwert zu beurteilen, einschließt.

13. Vorrichtung **nach Anspruch 12,** wobei die Verarbeitungsmittel ausgelegt sind, um eine Vielzahl von Werten der Umdrehungen pro Zeiteinheit der Schiffsschraube (12) bei einer vorbestimmten Geschwindigkeit des Wasserfahrzeug durch Wasser aus einer jeweiligen Vielzahl von Verhältnissen von Umdrehungen pro Zeiteinheit der Schiffsschraube (14) im Vergleich zu Zeit zu verarbeiten, um die Vielzahl von Werten aus der Vielzahl von Verhältnissen zu bestimmen und den Anwuchs an der Schiffsschraube (14) auf der Grundlage der Werte zu beurteilen.

14. Vorrichtung **nach Anspruch 12 oder Anspruch 13,** wobei die Vorrichtung ein weiteres Datenerfassungssystem einschließt, zum Aufzeichnen der Anhaltezeit oder/und Anhalteentfernung, die das Wasserfahrzeug (12) benötigt, um von einer ersten vorgegebenen Geschwindigkeit durch Wasser auf eine zweite vorgegebene Geschwindigkeit durch Wasser zu verlangsamen, wobei die Datenspeichermittel ausgelegt sind, um die Anhaltezeit oder/und die Anhalteentfernung zu speichern, und die Verarbeitungsmittel ausgelegt sind, um den Anwuchs an der Schiffsschraube (14) auf der Grundlage des Vergleichs in Verbindung mit der Anhaltezeit oder/und der Anhalteentfernung zu beurteilen.

## Revendications

1. Procédé d'évaluation de l'encrassement d'une hélice (14) montée sur un navire (10) et reliée à un moteur principal (12) qui fournit une énergie à l'hélice (14), le procédé incluant, alors que le navire (10) se déplace avec une vitesse prédéfinie à travers l'eau, l'arrêt de l'énergie fournie à l'hélice (14) et l'enregistrement de la relation réelle de révolutions par unité de temps de l'hélice (14) versus le temps et selon lequel le procédé est **caractérisé en ce qu'**il comprend en outre a) la récupération d'une relation nominale de révolutions par unité de temps de l'hélice (14) versus le temps, laquelle relation nominale définit la relation de révolutions par unité de temps de l'hélice (14) versus le temps sans encrassement et montée sur le navire, alors que le moteur principal (12) ne fournit pas d'énergie à l'hélice (14) et la vitesse à travers l'eau du navire (10) au point initial de la relation nominale étant égale à ladite vitesse prédéfinie, b) la comparaison de la relation nominale et de la relation réelle et la quantification de la comparaison de la relation réelle et de la relation nominale par au moins un paramètre arithmétique, c) l'évaluation du niveau d'encrassement de l'hélice (14) par comparaison du paramètre arithmétique avec une valeur seuil.

2. Procédé selon la revendication 1, incluant l'enregistrement de la relation nominale de révolutions par unité de temps de l'hélice (14) versus le temps, le démarrage au temps t=0, lorsque l'hélice (14) ne présente aucun encrassement et alors que le moteur principal (12) ne fournit pas d'énergie à l'hélice (14), la vitesse à travers l'eau du navire au temps t=0 étant égale à ladite vitesse prédéfinie et l'enregistrement de la relation nominale dans des moyens de stockage électroniques.

3. Procédé **selon la revendication 1 ou la revendication 2,** selon lequel l'échantillonnage des révolutions par unité de temps de l'hélice (14) pendant l'enregistrement de la relation réelle est réalisé à un taux d'échantillonnage égal ou inférieur à 60 Hz, de préférence avec un taux d'échantillonnage d'approximativement 1 Hz.

4. Procédé **selon l'une quelconque des revendications 1 à 3,** selon lequel l'échantillonnage des révolutions par unité de temps de l'hélice (14) pendant l'enregistrement de la relation nominale est réalisé à un taux d'échantillonnage égal ou inférieur à 60 Hz, de préférence avec un taux d'échantillonnage d'approximativement 1 Hz.

5. Procédé **selon l'une quelconque des revendications 1 à 4,** incluant la détermination des révolutions par unité de temps de l'hélice (14) NN selon la relation nominale, lorsque la vitesse à travers l'eau du navire (10) présente une valeur prédéterminée, la détermination des révolutions par unité de temps de l'hélice (14) NA selon la relation réelle, lorsque la vitesse à travers l'eau du navire (10) présente ladite valeur prédéterminée, la comparaison de NN et de NA, la comparaison de la relation nominale et de la relation réelle étant basées sur la comparaison de NN et de NA.

6. Procédé **selon l'une quelconque des revendications 1 à 5**, selon lequel ladite valeur prédéterminée est dans une plage de 30 % à 70 % de la vitesse prédéfinie, de préférence dans une plage de 45 % à 65 % de la vitesse prédéfinie.

7. Procédé **selon l'une quelconque des revendications** 1 à 5, selon lequel ladite valeur prédéterminée est égale ou supérieure à 60 % de la vitesse prédéfinie.

8. Procédé **selon l'une quelconque des revendications** 1 à 7, selon lequel pendant l'enregistrement de la relation réelle de révolutions par unité de temps de l'hélice (14) versus le temps alors que le navire (10) se déplace avec une vitesse prédéfinie à travers l'eau, l'enregistrement du temps d'arrêt réel dont le navire (12) a besoin pour décélérer d'une première vitesse préétablie à travers l'eau à une seconde vitesse préétablie à travers l'eau, la récupération d'une valeur de temps d'arrêt nominal dont le navire (12) a besoin pour décélérer de la première vitesse préétablie à travers l'eau à la seconde vitesse préétablie à travers l'eau avec la coque du navire (10) exempte d'encrassement, la comparaison du temps d'arrêt réel et du temps d'arrêt nominal et la définition d'un index réfléchissant l'encrassement de l'hélice (14) qui dépend de la comparaison de la relation réelle et de la relation nominale et de la comparaison du temps d'arrêt réel et du temps d'arrêt nominal.

9. Programme informatique pour l'évaluation de l'encrassement d'une hélice (14) montée sur un navire (10) et reliée à un moteur principal (12) qui fournit de l'énergie à l'hélice (14) comprenant des instructions qui, lorsque le programme est exécuté par un ordinateur, amènent l'ordinateur à réaliser les étapes suivantes: a) la lecture d'une relation nominale de révolutions par unité de temps de l'hélice (14) versus le temps et une relation réelle de révolutions par unité de temps de l'hélice (14) versus le temps alors que le moteur principal (12) ne fournit pas d'énergie à l'hélice (14), b) la comparaison de la relation nominale et de la relation réelle et la quantification de la comparaison de la relation réelle et de la relation nominale par au moins un paramètre arithmétique et c) l'évaluation du niveau d'encrassement de l'hélice (14) par comparaison du paramètre arithmétique avec une valeur seuil, d) l'alerte d'un utilisateur sur l'encrassement de l'hélice (14) sur la base de ladite évaluation.

10. Programme informatique **selon la revendication** 9, selon lequel la comparaison de la relation nominale et de la relation réelle est réalisée par comparaison des valeurs des révolutions par unité de temps de l'hélice (14) obtenues par la relation nominale et la relation réelle respectivement, à une vitesse prédéterminée.

11. Programme informatique **selon la revendication** 9 ou 10, chargé sur un ordinateur à bord d'un navire (10) avec un moteur principal (12) configuré pour fournir de l'énergie à l'hélice (12), lequel ordinateur présente des moyens pour recevoir des signaux de capteurs, selon lequel les capteurs fournissent des données de la vitesse du navire (10), alors que le navire (10) se déplace à travers l'eau avec le moteur principal (12) ne fournissant pas d'énergie à l'hélice (14), lesdites données étant traitées par le programme informatique en combinaison avec la relation nominale et la relation réelle, pour déterminer l'encrassement de l'hélice (14) et de la coque du navire (10).

12. Dispositif pour évaluer l'encrassement d'une hélice (14) montée sur un navire (10) et reliée à un moteur principal (12) qui fournit de l'énergie à l'hélice (25), selon lequel le dispositif comporte un système d'acquisition de données avec des capteurs pour enregistrer la relation de révolutions par unité de temps de l'hélice (14) versus le temps alors que le moteur principal (12) ne fournit pas d'énergie à l'hélice (14), un moyen de stockage de données configuré pour stocker ladite relation, des moyens de transfert de données pour recevoir des données du système d'acquisition de données et les stocker sur le moyen de stockage de données et des moyens de traitement configurés pour traiter une pluralité de relations de révolutions par unité de temps versus le temps de l'hélice (14), pour comparer ledites relations, quantifier la comparaison par au moins un paramètre arithmétique et évaluer le niveau d'encrassement de l'hélice (14) par comparaison du paramètre arithmétique avec une valeur seuil.

13. Dispositif **selon la revendication 12,** selon lequel les moyens de traitement sont configurés pour traiter une pluralité de valeurs des révolutions par unité de temps de l'hélice (12) à une vitesse prédéterminée à travers l'eau du navire depuis une pluralité respective de relations de révolutions par unité de temps de l'hélice (14) versus le temps, pour déterminer ladite pluralité de valeurs depuis ladite pluralité de relations et pour évaluer l'encrassement de l'hélice (14) sur la base desdites valeurs.

14. Dispositif **selon la revendication 12 ou la revendication 13,** selon lequel le dispositif comporte un autre système d'acquisition de données pour enregistrer le temps d'arrêt et/ou la distance d'arrêt dont le navire (12) a besoin pour décélérer d'une première vitesse préétablie à travers l'eau à une seconde vitesse préétablie à travers l'eau, les moyens de stockage de données étant configurés pour enregistrer ledit temps d'arrêt et/ou ladite distance d'arrêt, et les moyens de traitement étant configurés pour évaluer l'encrassement de l'hélice (14) sur la base de ladite comparaison en combinaison avec le temps d'arrêt et/ou la distance d'arrêt.
